# DEMANDE DE BREVET EUROPEEN

(11) **EP 1 134 863 A1**
(43) Date de publication de la demande: **19.09.2001**
(21) Numéro de dépôt: 01400596.1
(22) Date de dépôt: 07.03.2001
(51) Int. Cl.: H02B 1/42

(54) **Châssis, notamment pour appareillage électrique**

(30) Priorité: 17.03.2000 FR 0003448
(71) Demandeur: LEGRAND, F-87000 Limoges (FR); LEGRAND SNC, F-87000 Limoges (FR)
(72) Inventeur: Combas, Christian, 87240 Ambazac (FR); Textier, Jean-Luc, 87590 St Just le Martel (FR); Coste, Gilles, 87350 Panazol (FR)
(74) Mandataire: CABINET BONNET-THIRION

(57) **Abrégé**

L'invention concerne un ensemble de consoles gauche et droite identiques (100, 200), chaque console présentant la forme d'une marche d'escalier avec une marche haute (110, 210) et une marche basse (120, 220) positionnées de part et d'autre d'une contremarche, lesdites marches haute et basse de chaque console comportant au moins une lumière (111, 211), lesdites lumières étant agencées de manière différente l'une par rapport à l'autre, et l'une des consoles étant placée dessus/dessous et devant/derrière par rapport à l'autre de sorte que les consoles gauche et droite soient positionnées avec leurs marches basses dirigées l'une vers l'autre.

L'invention concerne également un châssis, notamment pour appareillage électrique comportant deux longerons (10, 11) reliés l'un à l'autre par au moins une traverse (20, 21), dans lequel les longerons sont liés à chaque traverse par l'intermédiaire d'un ensemble de consoles identiques tel que précité.

## Description

La présente invention concerne d'une manière générale les châssis du type de ceux mis en oeuvre par exemple pour le support d'un quelconque appareillage, et, plus précisément, d'un quelconque appareillage électrique.

Ces châssis interviennent le plus souvent au sein de quelconques enveloppes, telles que coffrets ou armoires, en étant disposés parallèlement au fond d'une telle enveloppe.

Ils comportent, très simplement, deux longerons qui, parallèles l'un à l'autre, sont reliés l'un à l'autre par une traverse.

En pratique, plusieurs traverses sont échelonnées parallèlement les unes aux autres le long de ces longerons.

Il peut s'agir de barreaux de section transversale quelconque, mais, le plus souvent, il s'agit de rails à profil normalisé, et, par exemple, de rails à profil en chapeau.

Cela est le cas, notamment, lorsque l'appareillage électrique à mettre en place ou, plus précisément, les appareillages électriques constituant cet appareillage sont modulaires.

Les châssis du type précité peuvent être intégrés à l'enveloppe ou être rapportés à celle-ci.

L'invention vise plus particulièrement ceux de ces châssis qui sont rapportés à l'enveloppe et qui s'appuient sur les contours de celle-ci par des moyens de fixation appropriés.

L'un des problèmes à surmonter est le rattrapage d'aplomb du châssis lors de sa fixation sur les bords d'une enveloppe scellée dans un mur de manière légèrement inclinée par rapport à la verticale.

Une solution à ce problème consiste à fixer le châssis par l'intermédiaire de consoles gauche et droite ou équivalent, qui comportent des platines de montage percées de différents trous de forme allongée, au travers desquels sont engagées des vis de fixation pour leur vissage dans les bords de l'enveloppe, lesdits trous desdites platines étant agencés de façon particulière à droite et à gauche pour permettre, en déplaçant les fûts des vis de fixation dans lesdits trous, d'ajuster la position relative des consoles gauche et droite afin de rattraper l'aplomb du châssis fixé sur l'enveloppe.

Une telle solution est notamment décrite dans le document EP 0 691 718.

Toutefois, cette solution est complexe et très coûteuse car elle nécessite de fabriquer indépendamment l'une de l'autre une série de consoles gauches et une série de consoles droites avec chacune des platines percées de trous orientés différemment de façon particulière.

Par rapport à l'état de la technique précité, la présente invention propose alors une nouvelle solution, pour le montage avec rattrapage d'aplomb d'un châssis pour appareillage dans une enveloppe quelconque, qui est simple et économique.

Plus particulièrement, l'invention propose un ensemble de consoles gauche et droite identiques, chaque console présentant la forme d'une marche d'escalier avec une marche haute et une marche basse positionnées de part et d'autre d'une contremarche, lesdites marches haute et basse de chaque console comportant chacune au moins une lumière, lesdites lumières étant agencées de manière différente l'une par rapport à l'autre, et l'une des consoles étant placée dessus/dessous et devant/derrière par rapport à l'autre, de sorte que les consoles gauche et droite soient positionnées avec leurs marches basses dirigées l'une vers l'autre.

Pour placer une console dessus/dessous par rapport à l'autre, il suffit de faire pivoter d'un demi-tour cette console autour d'un axe horizontal longitudinal, de sorte que la face supérieure de sa marche haute devienne la face inférieure de sa marche basse.

En outre, on prend ici comme repère, pour situer le devant et le derrière, la personne qui manipule la console, le devant étant situé à proximité de cette personne, et le derrière étant situé à l'opposé.

Ainsi, pour positionner une console devant/derrière par rapport à l'autre, il suffit de la faire pivoter d'un demi-tour autour d'un axe vertical.

Avantageusement, selon l'invention, une même console peut constituer une console gauche ou une console droite pour la fixation d'un châssis dans une enveloppe, il suffit alors d'orienter convenablement les consoles gauche et droite l'une par rapport à l'autre.

D'autres caractéristiques avantageuses et non limitatives de l'ensemble de consoles selon l'invention sont les suivantes :
- la marche haute de la console gauche comportant une lumière de forme déterminée dans une région d'extrémité, la marche haute de la console droite comporte dans la région d'extrémité opposée une lumière de forme identique ;
- la vue de dessus de la marche haute de la console gauche correspond à la vue de dessus de la marche haute de la console droite reflétée dans un miroir placé transversalement à ladite marche à son extrémité arrière ;
- les marches haute et basse de chaque console gauche et droite comprennent chacune une lumière de forme allongée rectiligne, préférentiellement oblongue ;
- vues de dessus, lesdites lumières de forme allongée rectiligne des marches hautes des consoles gauche et droite sont inclinées par rapport à la direction longitudinale desdites consoles suivant des directions parallèles ;
- les marches haute et basse de chaque console gauche et droite comprennent chacune une lumière sensiblement en forme de huit ;
- vues de dessus, lesdites lumières sensiblement en forme de huit des marches hautes des consoles gauche et droite sont inclinées par rapport à la direction longitudinale desdites consoles suivant des directions formant un angle compris entre environ 60 et 90 degrés ;
- les marches haute et basse de chaque console comportent chacune, dans une région médiane, un premier orifice traversant destiné à recevoir un organe de fixation pour la fixation d'une extrémité d'une traverse ;
- les marches haute et basse de chaque console comprennent chacune, sur des faces opposées, deux bossages disposés de part et d'autre du premier orifice traversant et à égale distance de celui-ci, lesdits bossages étant destinés à coopérer avec des creux formés dans une marche d'une autre console en forme de marche d'escalier du même type.

Cela peut être particulièrement avantageux pour pouvoir disposer, sur le châssis, de traverses implantées à des niveaux de profondeurs différentes.

En effet, des traverses pourraient être fixées au niveau des marches basses des premières consoles, et d'autres traverses pourraient être fixées au niveau des marches basses des deuxièmes consoles rapportées sur les marches basses des premières.

Cela permet de positionner sur le châssis des appareils électriques de hauteurs différentes, cela est le cas, notamment, lorsque doivent coexister, au sein d'une même enveloppe, sur des rangées différentes, des disjoncteurs de puissance, de hauteur nécessairement relativement importante, et des disjoncteurs divisionnaires, de hauteur plus réduite.

Ainsi, les disjoncteurs de puissance sont fixés sur les traverses dites basses fixées sur les marches basses des deuxièmes consoles, et les disjoncteurs divisionnaires sont fixés sur les traverses hautes fixées sur les marches basses des premières consoles.

L'invention propose également un châssis, notamment pour appareillage électrique, comportant deux longerons reliés l'un à l'autre par une pluralité de traverses, et les deux longerons étant reliés à chaque traverse par l'intermédiaire d'un ensemble de consoles identiques tel que précité, les extrémités de chaque traverse étant fixées aux marches basses des consoles gauche et droite, et chaque longeron étant rendu solidaire d'une des consoles gauche et droite, les lumières des marches hautes desdites consoles étant destinées à la fixation avec rattrapage d'aplomb du châssis sur une paroi.

Plus particulièrement, l'invention propose un châssis, notamment pour appareillage électrique, comportant une seule traverse et un ensemble de consoles gauche et droite identiques métalliques tel que précité, les extrémités de la traverse étant fixées aux marches basses des consoles gauche et droite, les lumières de forme allongée rectiligne des marches hautes desdites consoles étant destinées à la fixation avec un rattrapage d'aplomb du châssis sur une paroi, le rattrapage d'aplomb étant réalisé par ajustement de la position relative des consoles gauche et droite suivant une portion de cercle dont le centre est situé sensiblement au centre de la traverse.

Avantageusement, dans ce châssis, les marches basses de chaque console comportent chacune dans une région médiane un premier orifice traversant destiné à recevoir un organe de fixation pour la fixation d'une extrémité de ladite traverse.

En outre, dans ce châssis, les marches basses de chaque console comprennent chacune deux bossages disposés de part et d'autre desdits premiers orifices traversants et à égale distance de celui-ci, lesdits bossages étant destinés à coopérer avec des creux formés dans une marche d'une autre console en forme de marche d'escalier du même type pour la mise en place de la traverse à un niveau situé en dessous des marches basses desdites consoles gauche et droite.

En outre, préférentiellement, dans ce châssis, les marches hautes de chaque console comprennent chacune, dans une région comprise entre le premier orifice et la contremarche, un deuxième orifice traversant au travers duquel est destiné à s'engager un pion d'une plaque entretoise en matériau isolant à positionner entre les marches hautes desdites consoles et ladite paroi.

L'invention propose également un châssis, notamment pour appareillage électrique, comportant deux longerons reliés l'un à l'autre par un nombre pair de traverses parallèles, les deux longerons étant liés à chaque traverse par l'intermédiaire d'un ensemble de consoles gauche et droite métalliques tel que précité, les consoles étant toutes identiques, les extrémités de chaque traverse étant fixées aux marches basses des ensembles de consoles gauche et droite, un des deux longerons étant rendu solidaire de toutes les consoles gauches, l'autre longeron étant rendu solidaire de toutes les consoles droites, les lumières en forme de huit des marches hautes des ensembles de consoles gauche et droite étant destinées à la fixation avec un rattrapage d'aplomb du châssis sur une paroi, pour chaque couple de traverses positionnées de manière symétrique par rapport à un plan médian passant par le centre du châssis et orienté parallèlement aux traverses, les consoles gauches liées auxdites traverses dudit couple étant placées à cet effet dessus/dessous l'une par rapport à l'autre, de sorte que le rattrapage d'aplomb du châssis sur une paroi est réalisé par ajustement de la position relative de la console gauche liée à une traverse dudit couple par rapport à la console droite liée à l'autre traverse dudit couple, suivant des portions de cercles concentriques au centre du châssis.

Ici aussi, avantageusement, dans ce châssis, les marches basses de chaque console comportent chacune dans une région médiane un premier orifice traversant destiné à recevoir un organe de fixation pour la fixation d'une extrémité de chaque traverse.

En outre, dans ce châssis, avantageusement, les marches basses de chaque console comprennent chacune deux bossages disposés de part et d'autre du premier orifice traversant et à égale distance de celui-ci, lesdits bossages étant destinés à coopérer avec des creux formés dans une marche d'une autre console en forme de marche d'escalier du même type, pour la mise en place de traverses à un niveau situé en dessous des marches basses desdites consoles gauche et droite.

Au surplus, dans ce châssis, les marches hautes de chaque console comprennent chacune, dans une région comprise entre le premier orifice et la contremarche, un deuxième orifice traversant au travers duquel est destiné à s'engager un pion d'une plaque entretoise en matière isolante à positionner entre les marches hautes desdites consoles et ladite paroi.

Enfin, la présente invention propose également un châssis, notamment pour appareillage électrique, comportant deux longerons reliés l'un à l'autre par un nombre impair supérieur à un de traverses parallèles, à savoir un nombre pair de traverses d'extrémité et une traverse centrale, les deux longerons étant liés à chacune des traverses par l'intermédiaire d'un ensemble de consoles gauche et droite métalliques tel que précité, les consoles étant toutes identiques, les extrémités de chaque traverse étant fixées aux marches basses des ensembles de consoles gauche et droite, un des deux longerons étant rendu solidaire de toutes les consoles gauches, l'autre longeron étant rendu solidaire de toutes les consoles droites, les lumières en forme de huit des marches hautes des ensembles de consoles gauche et droite liés aux traverses d'extrémité et les lumières de forme allongée rectiligne des marches hautes desdites consoles gauche et droite liées à la traverse centrale, étant destinées à la fixation avec un rattrapage d'aplomb du châssis sur une paroi, pour chaque couple de traverses d'extrémité positionnées de manière symétrique par rapport à un plan médian passant par le centre du châssis et orienté parallèlement aux traverses, les consoles gauches liées auxdites traverses dudit couple étant placées à cet effet dessus/dessous l'une par rapport à l'autre, de sorte que le rattrapage d'aplomb du châssis sur une paroi est réalisé, d'une part, par ajustement de la position relative de la console gauche liée à une traverse dudit couple par rapport à la console droite liée à l'autre traverse dudit couple, suivant des portions de cercles et, d'autre part, par ajustement de la position relative des consoles gauche et droite liées à la traverse centrale suivant une portion d'un autre cercle, l'ensemble des cercles étant concentrique au centre du châssis situé au centre de la traverse centrale.

Dans ce châssis, avantageusement, les marches basses de chaque console comportent chacune, dans une région médiane, un premier orifice traversant destiné à recevoir un organe de fixation pour la fixation d'une extrémité de chaque traverse.

En outre, dans ce châssis, les marches basses de chaque console comprennent chacune deux bossages disposés de part et d'autre du premier orifice traversant et à égale distance de celui-ci, lesdits bossages étant destinés à coopérer avec des creux formés dans une marche d'une autre console en forme de marche d'escalier du même type pour la mise en place des traverses à un niveau situé en dessous des marches basses desdites consoles gauche et droite.

Par ailleurs, dans ce châssis, préférentiellement, les marches hautes de chaque console comprennent, dans une région comprise entre le premier orifice et la contremarche, un deuxième orifice traversant au travers duquel est destiné à s'engager un pion d'une plaque entretoise en matériau isolant à positionner entre les marches hautes desdites consoles et ladite paroi.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective de trois quarts de la console gauche de l'ensemble de consoles gauche et droite selon l'invention ;
- la figure 2 est une vue en perspective de trois quarts de la console droite de l'ensemble de consoles gauche et droite selon l'invention ;
- la figure 3 est une vue schématique en perspective de dessus d'un châssis selon l'invention disposé dans un coffret ;
- les figures 4a et 4b sont des vues de dessus et de dessous d'une plaque entretoise en matériau isolant à placer entre les marches hautes des consoles gauche et droite de l'ensemble selon l'invention et la paroi sur laquelle est fixé le châssis selon l'invention ;
- la figure 5 est une vue en perspective de dessus du châssis de la figure 3;
- la figure 6 est une vue schématique partielle de dessus d'un châssis à une traverse selon l'invention ;
- la figure 7 est une vue schématique partielle de dessus d'un châssis à deux traverses, selon l'invention ;
- la figure 8 est une vue schématique partielle de dessus d'un châssis à trois traverses, selon l'invention ; et
- la figure 9 est une vue schématique partielle de dessus d'un châssis à quatre traverses, selon l'invention.

De façon préliminaire, on notera que d'un mode de réalisation à l'autre représenté sur les différentes figures, les éléments identiques ou similaires ont été référencés dans la mesure du possible par les mêmes signes de référence et ne seront pas décrits à chaque fois.

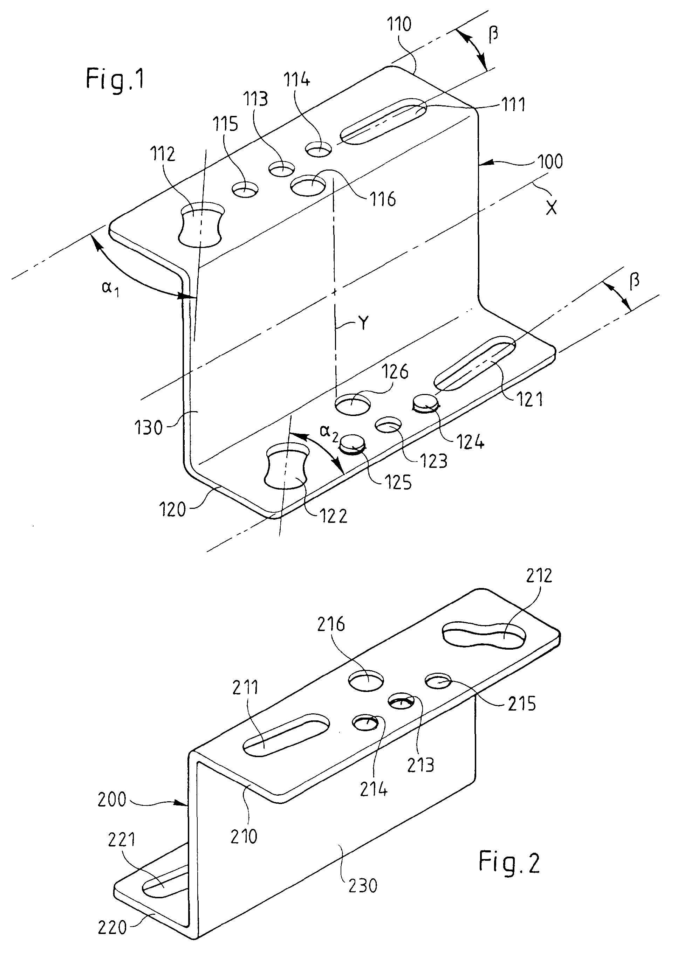

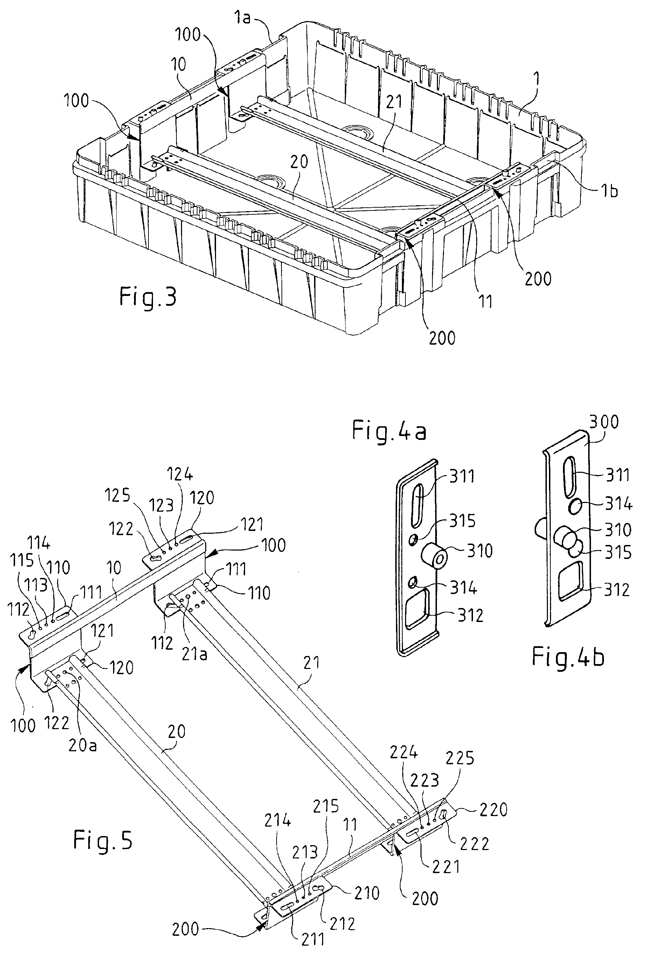

Sur les figures 1 et 2 on a représenté un ensemble de consoles gauche et droite identiques 100, 200 utilisées préférentiellement pour la fixation d'un châssis à une paroi, comme cela est plus particulièrement représenté sur la figure 3.

On entend par paroi, notamment, les contours ou rebords d'une enveloppe, telle qu'un coffret ou une armoire, au sein duquel intervient le châssis en étant disposé parallèlement au fond de cette enveloppe.

Plus particulièrement, chaque console 100, 200 réalisée avantageusement en matière métallique, c'est-à-dire à partir d'une plaque métallique formée et découpée ou poinçonnée, présente la forme d'une marche d'escalier avec une marche haute 110, 210 et une marche basse 120, 220 positionnées de part et d'autre d'une contremarche 130, 230.

Les marches haute 110, 210 et basse 120, 220 de chaque console 100, 200 comportent chacune au moins une lumière 111, 211, lesdites lumières étant agencées de manière différente l'une par rapport à l'autre, et l'une 200 des consoles étant placée dessus/dessous et devant/derrière par rapport à l'autre 100 de sorte que les consoles gauche 100 et droite 200 sont positionnées avec leurs marches basses 120, 220 dirigées l'une vers l'autre.

On entend ici, par positionner dessus/dessous, faire pivoter la console d'un demi-tour autour d'un axe horizontal longitudinal X pour placer la face supérieure de sa marche haute, de sorte qu'elle constitue la face inférieure de sa marche basse.

De plus, la notion de devant/derrière est à prendre par rapport à la personne manipulant la console, de sorte que le devant correspond à la position la plus proche de cette personne et le derrière à la position la plus éloignée.

Ainsi, en partant de la position de la console gauche, la console droite 200 correspond à la console gauche 100, après avoir fait pivoter celle-ci d'un demi-tour autour de l'axe X horizontal longitudinal, suivant d'un demi-tour autour de l'axe Y vertical de l'avant vers l'arrière.

Avantageusement, la vue de dessus de la marche haute 110 de la console gauche 100 correspond à la vue de dessus de la marche haute 210 de la console droite 200 reflétée dans un miroir (non représenté) placé transversalement à ladite marche à son extrémité arrière.

Ici, les marches haute 110, 210 et basse 120, 220 de chaque console gauche 100 et droite 200 comprennent chacune une lumière 111, 121, 211, 221 de forme allongée rectiligne, préférentiellement oblongue.

Les lumières de forme allongée et rectiligne 111, 121 de la console gauche sont positionnées dans une région d'extrémité de chacune des marches haute et basse de ladite console, et les lumières de forme allongée rectiligne 121, 221 de la console droite sont positionnées dans une région d'extrémité opposée de chacune des marches haute et basse de ladite console.

Comme cela sera expliqué plus en détail ultérieurement, les lumières de forme allongée rectiligne 111, 211 des marches hautes des consoles gauche 100 et droite 200 de l'ensemble représenté, servent à la fixation avec rattrapage d'aplomb d'un châssis à une traverse, sur les rebords d'un coffret encastré dans une paroi.

Vues de dessus, les lumières 111, 211 de forme allongée rectiligne des marches hautes 110, 210 des consoles gauche 100 et droite 200 sont inclinées par rapport à la direction longitudinale desdites consoles suivant des directions parallèles.

Plus particulièrement, la lumière 111, 121 ; 211, 221 de forme allongée rectiligne de chacune des marches haute 110, 210 et basse 120, 220 de chaque console 100, 200, est inclinée d'un angle β d'environ 4 degrés par rapport à la direction longitudinale de la console.

Par ailleurs, les marches haute 110, 210 et basse 120, 220 de chaque console gauche 100 et droite 200 comprennent chacune une lumière 112, 122 ; 212, 222 sensiblement en forme de huit.

On peut imaginer une autre forme équivalente à celle du huit, par exemple la forme en haricot ou équivalent.

Vues de dessus, les lumières 112, 212 sensiblement en forme de huit des marches hautes 110, 210 des consoles gauche 100 et droite 200, sont inclinées par rapport à la direction longitudinale desdites consoles suivant des directions formant un angle compris entre environ 60 et 90 degrés.

Plus particulièrement, la lumière 112 sensiblement en forme de huit de l'une 110 des marches haute et basse de chaque console 100 est inclinée d'un angle α 1 d'environ 36 degrés par rapport à la direction longitudinale de la console, et la lumière 122 sensiblement en forme de huit de l'autre 120 des marches haute et basse de chaque console 100 est inclinée d'un angle α 2 d'environ 31 degrés par rapport à la direction longitudinale de la console.

Ici, la lumière 112 sensiblement en forme de huit de la marche haute 110 de la console gauche 100 est inclinée vers la droite et vers l'avant d'un angle α 1 d'environ 36 degrés par rapport à la direction longitudinale de la console 100, et la lumière 122 sensiblement en forme de huit de la marche basse 120 de la console gauche 100 est orientée vers l'avant et vers la droite en étant inclinée d'un angle α 2 d'environ 31 degrés par rapport à la direction longitudinale de la console 100.

Ainsi, les lumières 112, 122 en forme de huit des marches haute et basse de chaque console 100 sont orientées selon des angles différents par rapport à la direction longitudinale de la console.

En ce qui concerne la console droite 200, la lumière 212 sensiblement en forme de huit de la marche haute 210 de cette console est orientée vers l'arrière et vers la droite, selon un angle d'environ 31 degrés par rapport à la direction longitudinale de ladite console, et la lumière sensiblement en forme de huit de la marche basse de cette console 200 est orientée également vers l'arrière et vers la droite, en étant inclinée d'un angle d'environ 36 degrés par rapport à la direction longitudinale de la console.

Comme cela sera décrit plus en détail ultérieurement, les lumières sensiblement en forme de huit des consoles gauche et droite servent à la fixation avec rattrapage d'aplomb d'un châssis selon l'invention comportant un nombre de traverses pair ou impair supérieur à un.

En outre, les marches haute 110, 210 et basse 120, 220 de chaque console 100, 200 comportent chacune, dans une région médiane, un premier orifice traversant 113, 123, 213 destiné à recevoir un organe de fixation pour la fixation d'une extrémité d'une traverse.

Bien entendu, c'est l'orifice traversant de la marche basse qui sert à la fixation d'une extrémité d'une traverse, celui de la marche haute est inutilisé.

En outre, les marches haute 110, 210 et basse 120, 220 de chaque console 100, 200 comprennent chacune, sur des faces opposées, deux bossages 114, 115, 124, 125, 214, 215 disposés de part et d'autre dudit premier orifice traversant 113, 123, 213 et à égale distance de celui-ci, lesdits bossages étant destinés à coopérer avec des creux formés dans une marche d'une autre console (ici non représentée) en forme de marche d'escalier du même type.

Seuls les bossages des marches basses des consoles gauche et droite sont utilisés pour ce type d'agencement.

Le fait de pouvoir fixer une seconde console à la marche basse d'une première console, permet de fixer des traverses à deux niveaux de profondeur.

Cela est particulièrement intéressant pour permettre de monter sur des châssis des appareillages de hauteurs différentes sans que ceux-ci ne fassent saillie du plastron supérieur de l'enveloppe dans laquelle est monté le châssis en question.

Les marches haute et basse de chaque console 100, 200 comprennent chacune, dans une région comprise entre le premier orifice 113, 123, 213 et la contremarche 130, 230, un deuxième orifice traversant 116, 126, 216.

Ce deuxième orifice traversant est utilisé seulement pour la marche haute 110, 210 de chaque console 100, 200, pour accueillir un pion 310 d'une plaque entretoise 300 isolante (voir figures 4a, 4b) à positionner entre la marche haute de chacune des consoles et la paroi de fixation de la console.

En référence aux figures 3 à 9, nous allons décrire différents modes de réalisation d'un châssis, notamment pour appareillage électrique, intervenant au sein d'une enveloppe, telle qu'un coffret à encastrer dans un mur, et à fixer sur les contours de ce coffret.

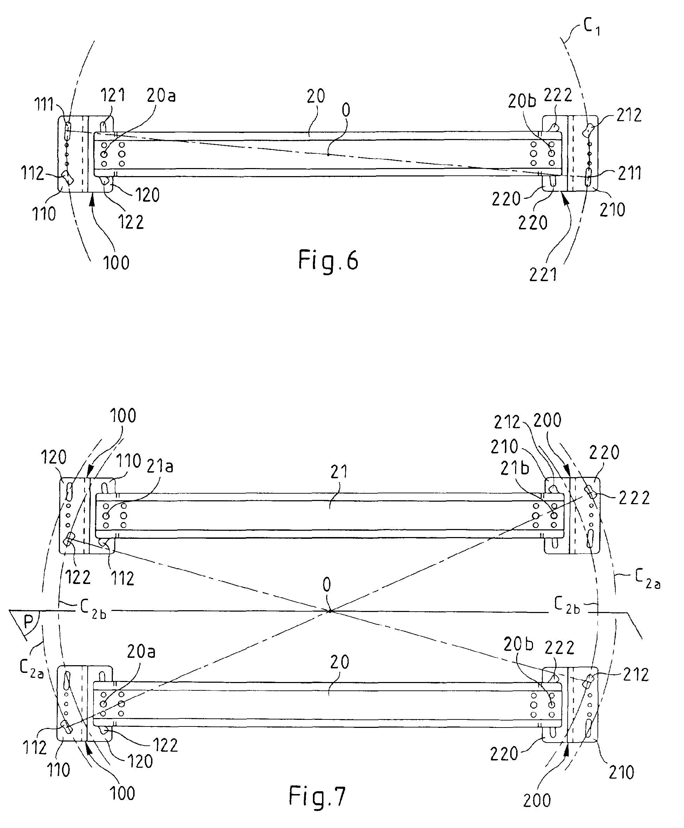

Plus particulièrement, sur la figure 6, on a représenté un châssis comportant une seule traverse 20.

La traverse 20 se présente ici sous la forme d'un rail métallique à profil en chapeau.

La traverse 20 relie un ensemble de consoles gauche et droite métalliques 100, 200 du type de celles décrites en références aux figures 1 et 2.

Les extrémités 20a, 20b de la traverse 20 sont fixées aux marches basses 120, 220 des consoles gauche 100 et droite 200, par l'intermédiaire d'un trou de fixation central qui vient en correspondance avec le premier orifice traversant de chacune des marches basses des consoles gauche et droite.

Ici, comme le montre la figure 6, les lumières 111, 211 de forme allongée rectiligne des marches hautes 110, 210 des consoles gauche et droite 100, 200 sont destinées à la fixation avec rattrapage d'aplomb du châssis sur une paroi, cette paroi étant constituée par les bords parallèles longitudinaux 1a, 1b du coffret 1 (voir figure 3).

Ces lumières 111, 211 sont destinées à accueillir un organe de fixation destiné à venir se fixer dans les rebords du coffret en question.

Le rattrapage d'aplomb de la traverse 20 du châssis représenté sur la figure 6 est réalisé par ajustement de la position relative des consoles gauche et droite 100, 200 suivant une portion de cercle C1 dont le centre O est situé sensiblement au centre de la traverse 20.

En effet, en déplaçant les organes de fixation dans les lumières oblongues 111, 211 des marches hautes des consoles gauche et droite selon les portions de cercle C1, on peut ajuster la position relative des consoles pour mettre à l'aplomb la traverse 20 du châssis, c'est-à-dire positionner sensiblement perpendiculairement la traverse par rapport à la verticale, même si le coffret 1 en question est scellé de travers dans la paroi.

Les consoles 100, 200 du châssis représenté sur la figure 6, comprennent également dans leurs marches basses des bossages positionnés de part et d'autre des premiers orifices traversants pour le montage d'une autre console du même type (non représentée), de façon à positionner la traverse 20 en question à une profondeur plus grande dans le coffret si désiré.

Sur les figures 3, 5 et 7, on a représenté un châssis, notamment pour appareillage électrique, à monter dans un coffret 1 destiné à être encastré dans une paroi, qui comprend deux longerons 10, 11 reliés l'un à l'autre par deux traverses parallèles 20, 21. Les deux longerons 10, 11, non représentés sur la figure 7, mais plus particulièrement représentés sur les figures 3 et 5, sont liés à chaque traverse 20, 21, par l'intermédiaire d'un ensemble de consoles gauche et droite métalliques 100, 200 tel que représenté sur les figures 1 et 2.

Les consoles 100, 200 sont toutes identiques, les extrémités 20a, 20b ; 21a, 21b de chaque traverse 20, 21 sont fixées aux marches basses 120, 220 ; 110, 210 des deux ensembles de consoles gauche et droite 100, 200, un des longerons 10 étant rendu solidaire, par exemple par soudage, de toutes les consoles gauches 100, avec, préférentiellement, une face placée contre les contremarches 130 desdites consoles gauches 100, l'autre longeron 11 étant rendu solidaire de toutes les consoles droites 200, avec, préférentiellement, une face placée contre les contremarches 230 desdites consoles droites 200.

En effet, avantageusement, les longerons 10, 11 présentent ici une section en L, cette configuration en L permettant l'appui de ceux-ci sur les marches hautes et les contremarches desdites consoles, ce qui participe à la rigidité du châssis.

Bien entendu, selon un autre mode de réalisation non représenté, on pourrait envisager des longerons droits.

Les lumières 112, 212 ; 122, 222 en forme de huit des marches hautes des ensembles de consoles gauche et droite 100, 200 sont destinées ici à la fixation avec un rattrapage d'aplomb du châssis sur les rebords parallèles 1a, 1b du coffret 1.

Les deux traverses 20, 21 étant positionnées de manière symétrique par rapport à un plan médian P passant par le centre O du châssis et orienté parallèlement aux traverses, les consoles gauches 100 liées auxdites traverses 20, 21 sont placées à cet effet dessus/dessous l'une par rapport à l'autre, et chaque console droite 200 correspondante étant placée dessus/dessous et devant/derrière par rapport à la console gauche correspondante. Ainsi, le rattrapage d'aplomb du châssis sur les rebords 1a, 1b du coffret est réalisé par l'ajustement de la position relative de la console gauche 100 liée à une traverse 20 par rapport à la console droite 200 liée à l'autre traverse 21, selon des portions de cercles C2a, C2b concentriques au centre O du châssis.

Comme on peut le distinguer sur la figure 5, ici aussi les marches basses de chaque console 100, 200 des traverses 20, 21 comportent chacune, dans une région médiane, un premier orifice traversant destiné à recevoir un organe de fixation pour la fixation d'une extrémité 20a, 20b, 21a, 21b de chaque traverse 20,21.

Les marches basses de chaque console comprennent également chacune deux bossages disposés de part et d'autre dudit premier orifice traversant et à égale distance de celui-ci, lesdits bossages étant destinés à coopérer avec des creux formés dans une marche basse d'une autre console en forme de marche d'escalier du même type (ici non représentée), pour la mise en place des traverses 20, 21, ou une des traverses, à un niveau situé en dessous des marches basses desdites consoles gauche et droite.

En outre, avantageusement, les marches basses de chaque console 100, 200 du châssis représenté sur les figures 3, 5 et 7 peuvent comprendre chacune, dans une région comprise entre le premier orifice et la contremarche, un deuxième orifice traversant au travers duquel est destiné à s'engager un pion 310 (voir figures 4a et 4b) d'une plaque entretoise 300 en matériau isolant à positionner entre les marches hautes desdites consoles et la paroi de fixation, ici les rebords 1a, 1b du coffret 1.

Plus particulièrement, cette plaque entretoise 300 en matériau isolant est représentée sur les figures 4a et 4b, elle comporte à cet effet des bossages d'appui 314, 315 disposés de part et d'autre du pion 310 en étant légèrement décalés de celui-ci. Les pions 314, 315 s'engagent dans les bossages 114, 115; 124, 125 et permettent à la plaque entretoise 300 d'être en appui stable entre le coffret 1 et la console correspondante. Elle comporte également à chacune de ses extrémités des lumières 311, 312 se positionnant en regard d'une des lumières des marches hautes des consoles gauche 100 et droite 200 du châssis.

Une 311 des lumières de la plaque entretoise 300 est de forme rectiligne allongée orientée selon la même orientation que la lumière oblongue 111, 211 correspondante de la marche haute 110, 210 de la console gauche 100 et droite 200 en question, de sorte que, lorsque la plaque entretoise est positionnée entre les marches hautes et la paroi de fixation des consoles, les lumières rectilignes allongées se positionnent en regard l'une de l'autre.

L'autre lumière 312 de la plaque entretoise 300 présente une forme carrée, destinée à venir en correspondance avec les lumières sensiblement en forme de huit des marches hautes des consoles gauche et droite.

La forme carrée de la lumière 312 permet de correspondre avec les différentes orientations de la lumière en forme de huit des marches hautes des consoles gauche et droite du châssis.

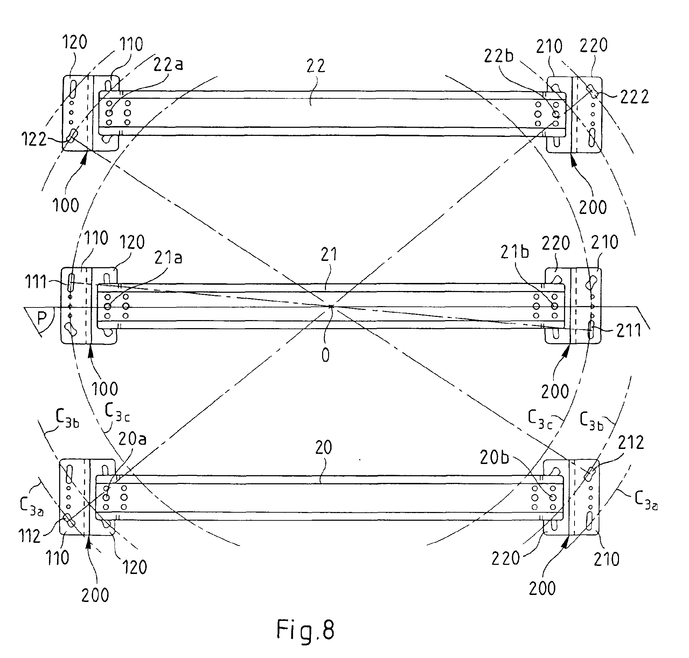

Sur la figure 8 on a représenté un châssis, notamment pour appareillage électrique, du même type que celui représenté sur les figures précédentes, et comportant à cet effet deux longerons (non représentés) du type de ceux représentés sur la figure 3, reliés l'un à l'autre par un nombre impair de traverses parallèles, ici trois traverses 20, 21, 22, deux traverses d'extrémité 20, 22 et une traverse centrale 21.

Les deux longerons non représentés sont liés à chaque traverse 20, 21, 22 par l'intermédiaire d'un ensemble de consoles gauche et droite métalliques 100, 200, tel que représenté sur les figures 1 et 2.

Les consoles 100, 200 du châssis représentées sur la figure 8 sont toutes identiques.

Les extrémités 20a, 20b, 21a, 21b, 22a, 22b des consoles 20, 21, 22 sont fixées aux marches basses 120, 220 ; 120, 220 ; 110, 210 des ensembles de consoles gauche et droite 100, 200, un des deux longerons étant rendu solidaire de toutes les consoles gauches 100, par soudage, avec une face placée contre les contremarches desdites consoles gauches, l'autre longeron étant rendu solidaire de toutes les consoles droites 200, par soudage, avec une face placée contre les contremarches desdites consoles droites 200.

Ici, les lumières 112, 212 ; 122, 222 en forme de huit des marches hautes des ensembles de consoles gauche et droite 100, 200 liés aux traverses d'extrémité 20, 22 positionnées symétriquement par rapport à un plan médian P passant par le centre O du châssis et positionné parallèlement auxdites traverses, et les lumières 111, 211 de forme allongée rectiligne préférentiellement oblongue des marches hautes 110, 210 des consoles gauche et droite 100, 200 liées à la traverse centrale 21, sont destinées à la fixation avec rattrapage d'aplomb du châssis sur une paroi, plus particulièrement sur des rebords d'un coffret encastré dans un mur.

Comme précédemment, le rattrapage d'aplomb consiste à positionner les traverses perpendiculairement à la verticale d'une paroi.

Pour le couple de traverses d'extrémité 20, 22 positionnées de manière symétrique par rapport au plan médian P, les consoles gauches 100 liées auxdites traverses 20, 22 du couple sont placées à cet effet dessus/dessous l'une par rapport à l'autre.

Ainsi, la marche haute de l'une correspond à la marche basse de l'autre.

De plus, comme cela a été décrit en référence aux figures 1 et 2, les consoles droites 200 des traverses d'extrémité 20, 22 sont positionnées dessus/dessous et devant/derrière par rapport aux consoles gauches correspondantes, de sorte que le rattrapage d'aplomb du châssis sur une paroi est réalisé, d'une part, par ajustement de la position relative de la console gauche 100 liée à une traverse 20 du couple de traverses d'extrémité 20, 21 par rapport à la console droite 200 liée à l'autre traverse 21 dudit couple 20, 21, suivant des portions de cercles C3a et C3b, et, d'autre part, par ajustement de la position relative des consoles gauche 100 et droite 200 liées à la traverse centrale 21 suivant une portion d'un autre cercle C3c, l'ensemble des trois cercles C3a, C3b et C3c étant concentrique au centre O du châssis situé au centre de la traverse centrale 21.

L'ajustement de la position relative des consoles l'une par rapport à l'autre s'effectue en faisant coulisser l'organe de fixation introduit dans les différentes lumières, selon les portions de cercles précitées.

Ici aussi, les consoles comprennent des marches basses comportant chacune dans une région médiane un premier orifice traversant destiné à recevoir l'organe de fixation pour la fixation d'une extrémité de chaque traverse 20, 21, 22.

Les marches basses de chaque console comprennent également chacune deux bossages disposés de part et d'autre du premier orifice traversant et à égale distance de celui-ci, les bossages étant destinés à coopérer avec des creux formés dans une marche d'une autre console en forme de marche d'escalier du même type pour la mise en place des traverses 20, 21, 22 au niveau situé en dessous des marches basses desdites consoles gauche et droite.

Cela permet de positionner, si besoin est, les différentes traverses 20, 21, 22 à différentes profondeurs, pour fixer sur celles-ci des appareillages électriques de différentes hauteurs sans dépasser du plastron supérieur du coffret.

On peut également prévoir, mais cela n'est pas montré sur la figure 8, que les marches hautes de chaque console comprennent chacune, dans une région comprise entre le premier orifice et la contremarche, un deuxième orifice traversant pour la mise en place d'une plaque entretoise isolante du type de celle représentée sur les figures 4a et 4b.

Dans ce cas, le pion de la plaque entretoise s'engagera dans le deuxième orifice traversant de la marche haute de la console correspondante.

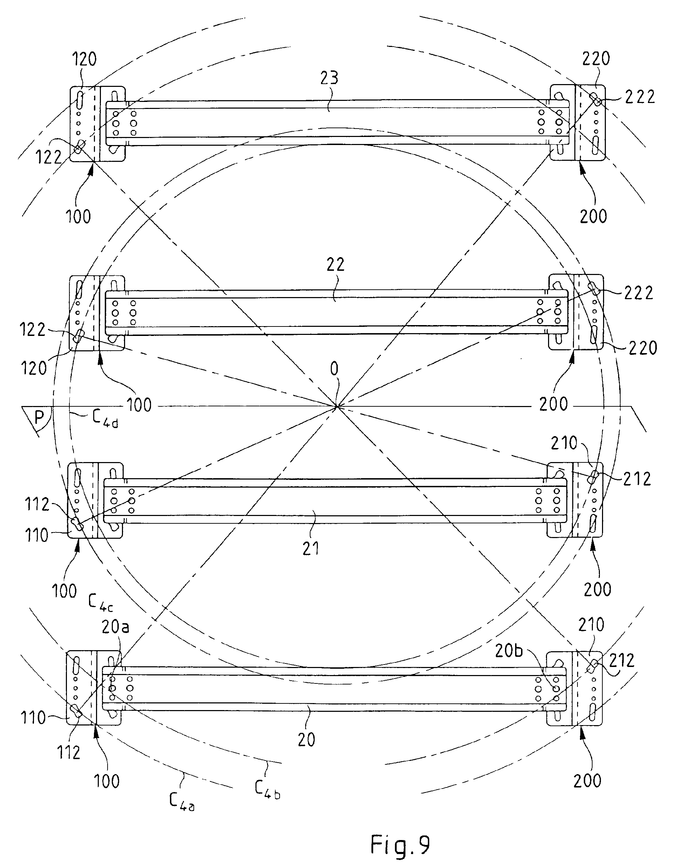

Sur la figure 9 on a représenté un châssis du type de ceux représentés sur les autres figures, mais comportant ici un nombre pair de traverses, et plus particulièrement quatre traverses parallèles 20, 21, 22, 23.

Ici, il y a deux couples de traverses positionnées l'une par rapport à l'autre de manière symétrique par rapport à un plan médian P contenant le centre O du châssis et positionné parallèlement auxdites traverses.

Le premier couple est constitué par deux traverses d'extrémité 20, 23 et le deuxième couple comprend les traverses dites centrales 21, 22.

Le châssis comporte des longerons (non représentés) du type de ceux qui sont représentés sur la figure 3 et reliés l'un à l'autre par les quatre traverses parallèles.

Les deux longerons sont liés à chaque traverse par l'intermédiaire d'un ensemble de consoles gauche et droite métalliques 100, 200 du type de celles décrites et représentées sur les figures 1 et 2.

Les consoles 100, 200 du châssis sont toutes identiques.

Les extrémités de chaque traverse 20, 21, 22, 23 sont fixées aux marches basses des ensembles de consoles gauche et droite 100, 200, un des longerons étant rendu solidaire de toutes les consoles gauches 100, par soudage, avec une face placée contre les contremarches desdites consoles gauches, l'autre longeron étant rendu solidaire de toutes les consoles droites 200, également par soudage, avec une face placée contre les contremarches desdites consoles droites 200.

Les lumières en forme de huit 112, 212, 112, 212, 122, 222, 122, 222 des marches hautes 110, 210, 110, 210, 120, 220, 120, 220 des ensembles de consoles gauche et droite 100, 200 sont destinées à la fixation avec rattrapage d'aplomb du châssis sur une paroi, et notamment sur les rebords d'un coffret encastré dans un mur destiné à accueillir ledit châssis.

Pour chaque couple de traverses 20, 23 ; 21, 22 positionnées de manière symétrique par rapport à un plan médian P, les consoles gauches 100 liées auxdites traverses dudit couple sont placées à cet effet dessus/dessous l'une par rapport à l'autre.

Ainsi, la console gauche 100 liée à la traverse 20 et la console gauche 100 liée à la traverse 23 sont placées dessus/dessous l'une par rapport à l'autre, et de même les consoles gauches 100 des traverses 21 et 22 sont placées dessus/dessous l'une par rapport à l'autre.

Par ailleurs, pour chaque traverse, la console droite 200 est placée dessus/dessous et devant/derrière par rapport à la console gauche 100 liée à ladite traverse.

Ainsi, le rattrapage d'aplomb du châssis sur la paroi est réalisé par ajustement de la position relative de la console gauche 100 liée à une traverse 20 dudit couple par rapport à la console droite 200 liée à l'autre traverse 23 dudit couple, suivant des portions de cercles C4a, C4b, C4c, C4d concentriques au centre O du châssis.

Ainsi, selon cet agencement, les consoles sont ajustées l'une par rapport à l'autre par couple de consoles positionnées globalement symétriquement l'une par rapport à l'autre par rapport au centre O du châssis.

Plus particulièrement, la console gauche 100 de la traverse 20 est ajustée relativement à la console droite 200 de la traverse 23, les deux lumières 112, 222 sensiblement en forme de huit des marches hautes desdites consoles étant orientées selon des tangentes au cercle C4a.

De même, la console droite 200 de la traverse 20 est ajustée relativement à la console gauche 100 liée à la traverse 23, les deux consoles étant positionnées globalement symétriquement l'une par rapport à l'autre par rapport au centre O du châssis, les deux lumières 212, 122 sensiblement en forme de huit, prévues dans les marches hautes desdites consoles 200, étant orientées selon des tangentes au cercle C4b.

En ce qui concerne le couple de traverses 21 et 22 positionnées symétriquement l'une par rapport à l'autre par rapport au plan médian P, ici encore la console gauche 100 liée à la traverse 21 est ajustée par rapport à la console droite 200 liée à la traverse 22, les deux lumières 112, 222 sensiblement en forme de huit, prévues dans les marches hautes 110, 220 respectivement des consoles gauche 100 et droite 200, étant orientées selon des tangentes au cercle C4c.

Enfin, la console gauche 100 liée à la traverse 22 est ajustée par rapport à la console droite 200 liée à la traverse 21, les lumières 122 et 212 sensiblement en forme de huit, prévues dans les marches hautes 120, 210 des consoles gauche 100 et droite 200, étant orientées selon des tangentes au cercle C4d.

Ici aussi, il est prévu des orifices de montage d'organe de fixation des traverses dans les marches basses desdites consoles, ainsi que des bossages positionnés de part et d'autre de ces orifices, pour la mise en place d'une autre console du même type en vue de la position de chaque traverse en dessous de la marche basse de chaque console d'origine.

Il peut être également prévu, mais cela n'apparaît pas sur la figure 9, que les marches hautes des consoles 100 et 200 comprennent, entre la contremarche et le premier orifice traversant, un autre orifice pour le passage d'un pion d'une plaque entretoise en matière isolante du type de celle représentée sur les figures 4a et 4b.

La présente invention n'est nullement limitée au mode de réalisation décrit et représenté, mais l'homme du métier saura y apporter toute variante conforme à son esprit.

## Revendications

1. Ensemble de consoles gauche et droite identiques (100, 200), chaque console présentant la forme d'une marche d'escalier avec une marche haute (110; 210) et une marche basse (120; 220) positionnées de part et d'autre d'une contremarche (130 ; 230), lesdites marches haute (110; 210) et basse (120 ; 220) de chaque console (100, 200) comportant chacune au moins une lumière (111 ; 211), lesdites lumières étant agencées de manière différente l'une par rapport à l'autre, et l'une (200) des consoles étant placée dessus/dessous et devant/derrière par rapport à l'autre (100) de sorte que les consoles gauche et droite (100, 200) soient positionnées avec leurs marches basses (120 ; 220) dirigées l'une vers l'autre.

2. Ensemble selon la revendication 1, **caractérisé en ce que** la marche haute (110) de la console gauche (100) comportant une lumière (111) de forme déterminée dans une région d'extrémité, la marche haute (210) de la console droite (200) comporte dans la région d'extrémité opposée une lumière (211) de forme identique.

3. Ensemble selon l'une des revendications 1ou 2, **caractérisé en ce que** la vue de dessus de la marche haute (110) de la console gauche (100) correspond à la vue de dessus de la marche haute (210) de la console droite (200) reflétée dans un miroir placé transversalement à ladite marche à son extrémité arrière.

4. Ensemble selon l'une des revendications 1 à 3, **caractérisé en ce que** les marches haute (110 ; 210) et basse (120 ; 220) de chaque console gauche (100) et droite (200) comprennent chacune une lumière (111, 121; 211, 221) de forme allongée rectiligne, préférentiellement oblongue.

5. Ensemble selon la revendication 4, **caractérisé en ce que** vues de dessus, lesdites lumières (111, 211) de forme allongée rectiligne des marches hautes (110, 210) des consoles gauche (100) et droite (200) sont inclinées par rapport à la direction longitudinale desdites consoles suivant des directions parallèles.

6. Ensemble selon la revendication 5, **caractérisé en ce que** ladite lumière (111, 121 ; 211, 221) de forme allongée rectiligne de chacune des marches haute (110 ; 210) et basse (120 ; 220) de chaque console (100, 200), est inclinée d'un angle β d'environ 4 degrés par rapport à la direction longitudinale de la console.

7. Ensemble selon l'une des revendications 1 à 6, **caractérisé en ce que** les marches haute (110 ; 210) et basse (120 ; 220) de chaque console gauche (100) et droite (200) comprennent chacune une lumière (112, 122 ; 212, 222) sensiblement en forme de huit.

8. Ensemble selon la revendication 7, **caractérisé en ce que** vues de dessus, lesdites lumières (112; 212) sensiblement en forme de huit des marches hautes (110; 210) des consoles gauche (100) et droite (200) sont inclinées par rapport à la direction longitudinale desdites consoles suivant des directions formant un angle compris entre environ 60 et 90 degrés.

9. Ensemble selon l'une des revendications 7 ou 8, **caractérisé en ce que** la lumière (112 ; 222) sensiblement en forme de huit de l'une (110 ; 220) des marches haute et basse de chaque console (100, 200) est inclinée d'un angle α 1 d'environ 36 degrés par rapport à la direction longitudinale de la console, et la lumière (122 ; 212) sensiblement en forme de huit de l'autre (120 ; 210) des marches haute et basse de chaque console (100, 200) est inclinée d'un angle α 2 d'environ 31 degrés par rapport à la direction longitudinale de la console.

10. Ensemble selon l'une quelconque des revendications précédentes, **caractérisé en ce que** les marches haute (110 ; 210) et basse (120 ; 220) de chaque console (100, 200) comportent chacune dans une région médiane un premier orifice traversant (113, 123 ; 213, 223) destiné à recevoir un organe de fixation pour la fixation d'une extrémité d'une traverse.

11. Ensemble selon la revendication 10, **caractérisé en ce que** les marches haute (110 ; 210) et basse (120 ; 220) de chaque console (100, 200) comprennent chacune sur des faces opposées deux bossages (114, 115, 124, 125 ; 214, 215) disposés de part et d'autre dudit premier orifice traversant (113, 123 ; 213, 223) et à égale distance de celui-ci, lesdits bossages étant destinés à coopérer avec des creux formés dans une marche d'une autre console en forme de marche d'escalier du même type.

12. Ensemble selon l'une des revendications 10 ou 11, caractérisé en ce les marches haute (110; 210) et basse (120; 220) de chaque console (100, 200) comprennent chacune, dans une région comprise entre le premier orifice (113, 123 ; 213, 223) et la contremarche (130 ; 230), un deuxième orifice traversant (116, 126, 216).

13. Ensemble selon l'une quelconque des revendications précédentes, **caractérisé en ce que** chaque console (100, 200) est réalisée en matière métallique.

14. Châssis, notamment pour appareillage électrique, comportant deux longerons (10, 11) reliés l'un à l'autre par une pluralité de traverses (20), **caractérisé en ce que** les deux longerons (10, 11) sont liés à chaque traverse (20) par l'intermédiaire d'un ensemble de consoles identiques (100, 200) selon l'une quelconque des revendications 1 à 13, les extrémités de chaque traverse (20) étant fixées aux marches basses (120 ; 220) des consoles gauche (100) et droite (200), et chaque longeron (10, 11) étant rendu solidaire d'une des consoles gauche (100) et droite (200), les lumières (111, 112; 211, 212) des marches hautes (110; 210) desdites consoles (100, 200) étant destinées à la fixation avec un rattrapage d'aplomb du châssis sur une paroi.

15. Châssis, notamment pour appareillage électrique, comportant une seule traverse, **caractérisé en ce qu'**il comporte en outre un ensemble de consoles gauche et droite identiques métalliques (100, 200) selon l'une des revendications 4 à 6, les extrémités de la traverse (20) étant fixées aux marches basses (120; 220) des consoles gauche (100) et droite (200), les lumières (111 ; 211) de forme allongée rectiligne des marches hautes (110 ; 210) desdites consoles (100, 200) étant destinées à la fixation avec un rattrapage d'aplomb du châssis sur une paroi, le rattrapage d'aplomb étant réalisé par ajustement de la position relative des consoles gauche et droite suivant une portion de cercle (C1) dont le centre (O) est situé sensiblement au centre de la traverse (20).

16. Châssis selon la revendication 15, **caractérisé en ce que** les marches basses (120 ; 220) de chaque console (100, 200) comportent chacune dans une région médiane un premier orifice traversant (123 ; 223) destiné à recevoir un organe de fixation pour la fixation d'une extrémité de la traverse (20).

17. Châssis selon la revendication 16, **caractérisé en ce que** les marches basses (120 ; 220) de chaque console (100, 200) comprennent chacune deux bossages (124, 125) disposés de part et d'autre dudit premier orifice traversant (123 ; 223) et à égale distance de celui-ci, lesdits bossages (124, 125) étant destinés à coopérer avec des creux formés dans une marche d'une autre console en forme de marche d'escalier du même type pour la mise en place de la traverse (20) à un niveau situé en dessous des marches basses (120 ; 220) desdites consoles gauche (100) et droite (200).

18. Châssis selon l'une des revendications 16 ou 17, caractérisé en ce les marches hautes (110; 210) de chaque console (100, 200) comprennent chacune, dans une région comprise entre le premier orifice et la contremarche, un deuxième orifice (116, 216, 126) traversant au travers duquel est destiné à s'engager un pion (310) d'une plaque entretoise (300) en matériau isolant à positionner entre les marches hautes (110; 210) desdites consoles (100, 200) et ladite paroi.

19. Châssis, notamment pour appareillage électrique, comportant deux longerons (10, 11) reliés l'un à l'autre par un nombre pair de traverses parallèles (20, 21, 22, 23), **caractérisé en ce que** les deux longerons (10, 11) sont liés à chaque traverse (20, 21, 22, 23) par l'intermédiaire d'un ensemble de consoles gauche et droite métalliques (100, 200) selon l'une des revendications 7 à 9, les consoles (100, 200) étant toutes identiques, les extrémités de chaque traverse (20, 21, 22, 23) étant fixées aux marches basses des ensembles de consoles gauche et droite (100, 200), un des deux longerons (10) étant rendu solidaire de toutes les consoles gauches (100), l'autre longeron (11) étant rendu solidaire de toutes les consoles droites (200), les lumières (112, 212 ; 112, 212 ; 122, 222 ; 122, 222) en forme de huit des marches hautes des ensembles de consoles gauche et droite (100, 200) étant destinées à la fixation avec un rattrapage d'aplomb du châssis sur une paroi, pour chaque couple de traverses positionnées de manière symétrique par rapport à un plan médian (P) passant par le centre (O) du châssis et orienté parallèlement aux traverses, les consoles gauches (100) liées auxdites traverses dudit couple étant placées à cet effet dessus/dessous l'une par rapport à l'autre, de sorte que le rattrapage d'aplomb du châssis sur une paroi est réalisé par ajustement de la position relative de la console gauche liée à une traverse dudit couple par rapport à la console droite liée à l'autre traverse dudit couple, suivant des portions de cercles (C2a, C2b) concentriques au centre (O) du châssis.

20. Châssis selon la revendication 19, **caractérisé en ce que** les marches basses de chaque console (100, 200) comportent chacune dans une région médiane un premier orifice traversant (123) destiné à recevoir un organe de fixation pour la fixation d'une extrémité de chaque traverse (20, 21, 22, 23).

21. Châssis selon la revendication 20, **caractérisé en ce que** les marches basses de chaque console (100, 200) comprennent chacune deux bossages disposés de part et d'autre dudit premier orifice traversant et à égale distance de celui-ci, lesdits bossages étant destinés à coopérer avec des creux formés dans une marche d'une autre console en forme de marche d'escalier du même type pour la mise en place des traverses (20, 21, 22, 23) à un niveau situé en dessous des marches basses (120, 220 ; 110, 210) desdites consoles gauche (100) et droite (200).

22. Châssis selon l'une des revendications 20 ou 21, caractérisé en ce les marches hautes de chaque console comprennent chacune, dans une région comprise entre le premier orifice et la contremarche, un deuxième orifice traversant (116, 126, 216) au travers duquel est destiné à s'engager un pion (310) d'une plaque entretoise (300) en matériau isolant à positionner entre les marches hautes desdites consoles et ladite paroi.

23. Châssis, notamment pour appareillage électrique, comportant deux longerons (10, 11) reliés l'un à l'autre par un nombre impair supérieur à un de traverses parallèles (20, 21, 22), à savoir un nombre pair de traverses d'extrémité (20, 22) et une traverse centrale (21), **caractérisé en ce que** les deux longerons (10, 11) sont liés à chaque traverse (20, 21, 22) par l'intermédiaire d'un ensemble de consoles gauche et droite métalliques (100, 200) selon l'une des revendications 4 à 9, les consoles (100, 200) étant toutes identiques, les extrémités de chaque traverse (20, 21, 22) étant fixées aux marches basses des ensembles de consoles gauche et droite (100, 200), un des deux longerons (10) étant rendu solidaire de toutes les consoles gauches (100), l'autre longeron (11) étant rendu solidaire de toutes les consoles droites (200), les lumières (112, 212; 122, 222) en forme de huit des marches hautes des ensembles de consoles gauche et droite (100, 200) liés aux traverses d'extrémité (20, 22) et les lumières (111 ; 211) de forme allongée rectiligne des marches hautes (110 ; 210) desdites consoles gauche et droite (100, 200) liées à la traverse centrale (21), étant destinées à la fixation avec un rattrapage d'aplomb du châssis sur une paroi, pour chaque couple de traverses d'extrémité positionnées de manière symétrique par rapport à un plan médian (P) passant par le centre (O) du châssis et orienté parallèlement aux traverses, les consoles gauches (100) liées auxdites traverses dudit couple étant placées à cet effet dessus/dessous l'une par rapport à l'autre, de sorte que le rattrapage d'aplomb du châssis sur une paroi est réalisé, d'une part, par ajustement de la position relative de la console gauche liée à une traverse dudit couple par rapport à la console droite liée à l'autre traverse dudit couple, suivant des portions de cercles (C3a, C3b) et, d'autre part, par ajustement de la position relative des consoles gauche et droite liées à la traverse centrale (21) suivant une portion d'un autre cercle (C3c), l'ensemble des cercles (C3a, C3b, C3c) étant concentrique au centre (O) du châssis situé au centre de la traverse centrale (21).

24. Châssis selon la revendication 23, **caractérisé en ce que** les marches basses de chaque console (100, 200) comportent chacune dans une région médiane un premier orifice traversant destiné à recevoir un organe de fixation pour la fixation d'une extrémité de chaque traverse (20, 21, 22).

25. Châssis selon la revendication 24, **caractérisé en ce que** les marches basses de chaque console (100, 200) comprennent chacune deux bossages disposés de part et d'autre dudit premier orifice traversant et à égale distance de celui-ci, lesdits bossages étant destinés à coopérer avec des creux formés dans une marche d'une autre console en forme de marche d'escalier du même type pour la mise en place des traverses (20, 21, 22) à un niveau situé en dessous des marches basses desdites consoles gauche (100) et droite (200).

26. Châssis selon l'une des revendications 24 ou 25, caractérisé en ce les marches hautes de chaque console comprennent chacune, dans une région comprise entre le premier orifice et la contremarche, un deuxième orifice traversant au travers duquel est destiné à s'engager un pion (310) d'une plaque entretoise (300) en matériau isolant à positionner entre les marches hautes desdites consoles et ladite paroi.
